# EUROPÄISCHE PATENTSCHRIFT

(11) **EP 1 125 534 B1**
(45) Veröffentlichungstag und Bekanntmachung des Hinweises auf die Patenterteilung: **16.11.2005**
(21) Anmeldenummer: 00128234.2
(22) Anmeldetag: 27.12.2000
(51) Int. Cl.: A47J 27/14, A47J 37/07

(54) **Garsystem mit Rohrkonstruktion**
Cooking system having a tube construction
Système de cuisson avec une construction de tubes

(30) Priorität: 04.02.2000 DE 10005003
(43) Veröffentlichungstag der Anmeldung: 22.08.2001
(73) Patentinhaber: Electrolux Deutschland GmbH, 90429 Nürnberg (DE)
(72) Erfinder: Piccoli, Primo L., 35578 Wetzlar (DE); Vorschulze, Klaus, 35745 Herborn (DE); Bangard, Claus, 35080 Bad Endbach (DE)
(74) Vertreter: Baumgartl, Gerhard Willi

(56) Entgegenhaltungen:
- EP-A- 0 887 037
- WO-A-98/15215
- CH-A- 684 993
- DE-A- 3 303 797
- DE-C- 84 253
- US-A- 3 959 620
- US-A- 5 819 720

## Beschreibung

Die Erfindung betrifft ein Garsystem, vorzugsweise zum Einsatz in gewerblichen Küchen.

In gewerblichen Küchen sind Garsysteme bekannt mit einer tisch- oder thekenförmigen Trägereinrichtung und mit einer oder mehreren auf der Trägereinrichtung in einem modularen Aufbau montierten, elektrisch oder mit Gas beheizten Gareinrichtungen, beispielsweise Gartiegeln oder Garpfannen, zum Garen von größeren Mengen von Speisen. Die Trägereinrichtung ist im allgemeinen aus Blechen und/oder Platten sowie Kantprofilteilen gefertigt. Die Metallteile sind miteinander verschweißt und anschließend geschliffen (*Prospekt "Creative System Counter Therma Grossküchen*" *der Electrolux Therma GmbH*).

DE 842 537 zeigt ein Garsystem ähnlich dem in Anspruch 1.

Aus der US 3,959,620, der EP 0 887 037 A2, der US 5,819,720 und der CH 684993 sind höhenverstellbare Outdoor-Gargeräte mit oder ohne Deckel bekannt, die von Hand abnehmbar oder schwenkbar sind. Die WO 98/15215 zeigt einen Speisenwärmer, dessen von Hand schwenkbarer Deckel bewegungsgedämpft ist.

Der Erfindung liegt nun die Aufgabe zugrunde, ein Garsystem zum Einsatz in gewerblichen Küchen (Großküchen), anzugeben, das einfach herstellbar ist und bei dem Funktionsteile für die Gareinrichtung vor äußeren Einflüssen geschützt sind.

Diese Aufgabe wird gemäß der Erfindung gelöst mit den Merkmalen des Anspruchs 1.

Das Garsystem umfasst
a) eine Gareinrichtung mit einer Heizeinrichtung zum Beheizen von Gargut (in einer oder mehreren Heizzonen) und
b) eine Trägereinrichtung (Trägerrahmen) zum Tragen der Gareinrichtung,
   wobei
c) die Trägereinrichtung eine Rohrkonstruktion (Rohrsysterm) umfasst, die im Rohrinnern wenigstens ein funktionsteil für die Gareinrichtung (Teil, das einer, insbesondere mechanischen oder thermischen, Funktion der Gareinrichtung dient) aufnimmt, und
d) das Garsystem wenigstens eine Bewegungsvorrichtung zum Kippen oder Drehen der Gareinrichtung oder wenigstens eines Gargutträgers oder Gargutbehälters oder eines Deckels zum Abdecken oder Erschließen eines Gargutbehälters umfasst und die Bewegungsvorrichtung wenigstens teilweise in dem Rohrinnenraum der Trägereinrichtung angeordnet ist und ferner eine mechanische (aktive), elektromechanische oder hydraulische Vorrichtung enthält.

Die Trägereinrichtung ist also zumindest überwiegend mit einem Rohr oder mehreren miteinander verbundenen Rohren gebildet. Es kann auch im Wesentlichen die gesamte Trägereinrichtung mit der Rohrkonstruktion gebildet sein.

Die Verwendung einer Rohrkonstruktion für die Trägereinrichtung des Garsystems hat zum einen den Vorteil, dass ein stabiler, einfach fertigbarer und platzsparender (kompakter) Aufbau der Trägereinrichtung ermöglicht ist, und zum anderen den weiteren Vorteil, dass für die Funktion der Gareinrichtung benötigte Bauteile (Funktionsteile) in der Rohrkonstruktion sicher befestigt werden können und nach außen durch den Rohrmantel vor Schmutz, Korrosion, mechanischer oder elektrischer Einwirkung oder sonstigen Umwelteinflüssen geschützt untergebracht werden können. Solche Funktionsbauteile können beispielsweise mechanische oder elektromechanische Komponenten zum Bewegen der Gareinrichtung insgesamt oder von Teilen davon oder Komponenten zum Zuführen von Energie zur Gareinrichtung sein.

Vorteilhafte Ausgestaltungen und Weiterbildungen des Garsystems gemäß der Erfindung sind in den vom Anspruch 1 abhängigen Ansprüchen angegeben.

Die Rohrkonstruktion umfaßt entweder nur ein Rohr, das entsprechend dem gewünschten Aufbau der Trägereinrichtung geformt ist, oder auch mehrere (wenigstens zwei) Rohre, die miteinander lösbar oder wenigstens teilweise auch unlösbar verbunden sind. Die Verwendung mehrerer Rohre hat den großen Vorteil, dass ein modularer Aufbau mit mehreren zusammenfügbaren Rohrmodulen (Rohrelementen) und damit eine Vielzahl von Varianten der Trägereinrichtung mit einer vergleichsweise kleinen Zahl von einzelnen Rohrmodulen möglich sind. Bei einer lösbaren Verbindung der Rohre kann eine bestehende Trägereinrichtung auch noch nach der Fertigung im Einsatz in einer Küche verändert werden. Dies ist von erheblichem Vorteil, insbesondere wenn die Trägereinrichtung an Gareinrichtungen verschiedener Gestalt und Größe angepasst werden soll und/oder von einem Ort zu einem anderen bewegt werden soll.

Das Rohr oder die Rohre der Trägereinrichtung sind vorzugsweise Rundrohre, also im Wesentlichen hohlzylindrisch ausgebildet. Es kann somit die Trägereinrichtung ohne Ecken und Kanten ausgebildet werden, wodurch die Reinigung der Trägereinrichtung besonders leicht ist und die Verletzungsgefahr beim Reinigen oder Hantieren an der Gareinrichtung verringert ist. Außerdem sind Rundrohre leicht herstellbar und aufgrund ihrer Rotationssymmetrie ideale Führungen für rotierende Teile des Garsystems.

Das bevorzugte Material für die Rohre der Trägereinrichtung ist Metall, vorzugsweise ein korrosionsfreies Metall wie Edelstahl oder Aluminium oder eine Aluminiumlegierung. Die Verformung der Rohre in eine gewünschte Gestalt kann nun denkbar einfach aus ursprünglich geraden Rohren durch einen oder mehrere Biegeprozesse geschehen. Biegeprozesse zum Biegen von Metallrohren stehen auf einem hohen, technisch ausgereiften Niveau zur Verfügung. Eine Verbindungstechnologie wie Schweißen oder Löten zum Verbinden von Blechen und Profilteilen und ein anschließendes Schleifen oder Prolieren der Verbindungsstellen sind infolge dieser Maßnahmen nicht mehr oder nur noch in sehr eingeschränktem Umfang erforderlich. Man erhält somit aufgrund ihres zusammenhängenden, nicht oder nur wenig durch Verbindungsstellen unterbrochenen Aufbaus eine stabile und auch im Design sehr ansprechende Konstruktion der Trägereinrichtung.

Für eine Drehbewegung enthält die Bewegungsvorrichtung dann insbesondere wenigstens ein Drehlager, das vorzugsweise im Rohrinnern der Trägereinrichtung angeordnet ist. Dem wenigstens einen Drehlager ist in einer vorteilhaften Weiterbildung wenigstens ein, vorzugsweise ebenfalls in dem Rohrinnenraum angeordnetes, dynamisches Element zum Ausüben eines Drehmomentes auf das Drehlager zugeordnet.

In einer vorteilhaften Ausführungsform ist als dynamisches Element eine Feder vorgesehen, deren eines Ende mit einem drehbaren Teil im Drehlager oder der Trägereinrichtung oder der Gareinrichtung gekoppelt ist, so dass sich dieses Ende bei einer Drehung im Drehlager mitdreht, und deren anderes Ende mit der Trägereinrichtung gekoppelt ist, so dass sich dieses andere Ende bei einer Drehung im Drehlager nicht mitdreht (ortsfest bleibt). Bei einer Drehung der beiden Enden relativ zueinander in einer Drehrichtung wird nun durch die elastischen Rückstellkräfte in der Feder ein Drehmoment ausgeübt. Solche Eigenschaften aufweisende Federn sind insbesondere zylindrische Schraübenfedern (helikale Torsionsfedern), Spiralfedern (spiralige Torsionsfedern) oder stabförmige Torsionsfedern. Die in der Feder wirkenden Rückstellkräfte werden praktisch vollständig in ein für die Drehung nutzbares Drehmoment umgewandelt und bewirken, anders als beim Stand der Technik, keine unerwünschten Reaktionskräfte durch Hebelwirkung auf andere Teile des Garsystems.

Wenn im Drehlager durch die Schwerkraft (Erdanziehungskraft, Gravitationskraft) ein Drehmoment bewirkt wird, was insbesondere bei einer gegen die Schwerkraftrichtung geneigten, beispielsweise senkrecht zur Schwerkraft gerichteten (horizontalen), Drehachse der Fall ist, so wirkt das von dem dynamischen Element ausgeübte Drehmoment vorzugsweise entgegengesetzt dem von der Gravitationskraft bewirkten Drehmoment. Das dynamische Element erleichtert somit die Handhabung beim Kippen oder Drehen schwerer Teile der Gareinrichtung, beispielsweise von nach oben zu drehenden Teilen wie Verschlussdeckeln, und führt dadurch zu einer ergonomischen Verbesserung des Garsystems. Im allgemeinen ist das Gegendrehmoment des dynamischen Elements kleiner als das von der Schwerkraft ausgeübte Drehmoment, damit die Schwerkraft ein sicheres Anliegen oder Schließen des drehbaren Teils in einer unteren Endposition bewirken kann.

In einer bevorzugten Ausbildung weist wenigstens ein Drehlager eine Ausgangsposition und eine Endposition für die Drehung auf, die auch die Drehbewegung der drehbaren Komponente der Gareinrichtung begrenzen. Die beiden Grenzpositionen der Drehbewegung werden vorzugsweise durch zusammenwirkende Anschlagsmittel, beispielsweise ineinander verlaufende Ringsegmentführung und ein zugeordneter in Umfangsrichtung kürzerer Ringsegmentvorsprung, festgelegt.

Das Drehmoment des dynamischen Elements auf das Drehlager bzw. die drehbare Komponente der Gareinrichtung ist nun in einer vorteilhaften Ausführungsform bei der Endposition des Drehlagers maximal und bei der Ausgangsposition gleich einem voreingestellten oder einstellbaren Ausgangsdrehmoment (Off-set-Moment).

Bei Verwendung einer Feder als dynamisches Element kann das Ausgangsdrehmoment insbesondere dadurch eingestellt werden, dass die beiden Enden der Feder in der Ausgangsposition des Drehlagers in wenigstens zwei verschiedene Drehpositionen relativ zueinander verstellt werden können und damit die Feder stärker oder weniger stark vorgespannt (belastet) wird. Es kann damit auch bei mit der Zeit nachlassender Federkraft der Feder ein gewünschtes Ausgangsdrehmoment wiederhergestellt werden, indem ein verstellbares Ende der Feder in eine andere Winkelposition gebracht wird und dadurch die Feder stärker vorgespannt wird. Für diese Verstellung der Winkelposition können für zumindest ein Ende der Feder mehrere in Umfangsrichtung um die Drehachse des Drehlagers verteilte Aufnahmen zum Aufnehmen dieses Endes der Feder vorgesehen sein oder, vorzugsweise eine in mehreren Winkelpositionen einstellbare Aufnahme, die insbesondere an einem Aufnahmeteil vorgesehen ist, das mehrere in Umfangsrichtung verteilte Gewinde aufweist, in die eine Feststellschraube eindrehbar ist. Das Aufnahmeteil kann über einen Verstellbolzen mit einem zugehörigen Werkzeug verdreht werden, beispielsweise einen Sechskant-Verstellbolzen.

Die Gareinrichtung des Garsystems umfasst insbesondere wenigstens einen Gargutbehälter zum Aufnehmen des Gargutes, beispielsweise eine Garpfanne oder einen Gartiegel, und als drehbare Komponente einen Deckel zum Abdecken oder Verschließen des Gargutbehälters. In dieser Ausführungsform ist das dynamische Element zur leichteren Bedienung des Deckels besonders vorteilhaft.

Im Rohrinnenraum der Trägereinrichtung können neben den genannten Bewegungsteilen auch andere Funktionsteile für die Gareinrichtung oder für die Trägereinrichtung selbst wenigstens teilweise angeordnet sein. Solche Funktionsteile können insbesondere elektrische und/oder gasführende Leitungen zur Heizeinrichtung oder zu einer Steuereinrichtung, Kühlleitungen, Antriebskomponenten, vorzugsweise motorische und/oder hydraulische Komponenten, zum Bewegen, insbesondere Kippen, der Gareinrichtung oder zur Höhenverstellung der Trägereinrichtung und damit der von der Trägereinrichtung getragenen Gareinrichtung oder auch, vorzugsweise höhenverstellbare, Aufstellfüße zum Aufstellen der Trägereinrichtung auf einem Boden sein.

Die Erfindung wird im Folgenden anhand von Ausführungsbeispielen unter Bezugnahme auf die Zeichnung weiter erläutert. Es zeigen jeweils in einer schematischen Darstellung:
- FIG 1: ein höhenverstellbares Garsystem mit einer aus Rohren gebildeten Trägereinrichtung für eine Gareinrichtung in einer Ansicht von vorne,
- FIG 2: das Garsystem gemäß FIG 1 in einer Seitenansicht,
- FIG 3: ein Garsystem mit Trägereinrichtung und Gareinrichtung ohne Höhenverstellung in einer Vorderan- sicht,
- FIG 4: das Garsystem gemäß FIG 3 in einer Seitenansicht,
- FIG 5: ein Garsystem mit einem drehbaren Verschlußdeckel für einen Gargutbehälter in einer perspektivischen Explosionsdarstellung,
- FIG 6: einen Teil der Rohrkonstruktion eines Garsystems mit einem Drehlager und einer Feder in einer geschnittenen Frontansicht,
- FIG 7: ein Teil eines Drehlagers in einer Frontansicht,
- FIG 8: das Drehlager gemäß FIG 7 in einer Seitenansicht,
- FIG 9: ein zu dem Teil gemäß den FIG 7 und 8 des Drehlagers korrespondierendes zweites Teil des Drehlagers in einer Frontansicht,
- FIG 10: das Drehlagerteil gemäß FIG 9 in einer Seitenansicht,
- FIG 11: ein Aufnahmeteil für eine Feder mit einer Vorspanneinrichtung in einer Frontansicht,
- FIG 12: das Aufnahmeteil gemäß FIG 11 in einer Seitenansicht,
- FIG 13: ein zweites Aufnahmeteil für die Feder in einer Frontansicht,
- FIG 14: das Aufnahmeteil gemäß FIG 13 in einer Seitenansicht.
Einander entsprechende Teile sind in den FIG 1 bis 14 mit denselben Bezugszeichen versehen.

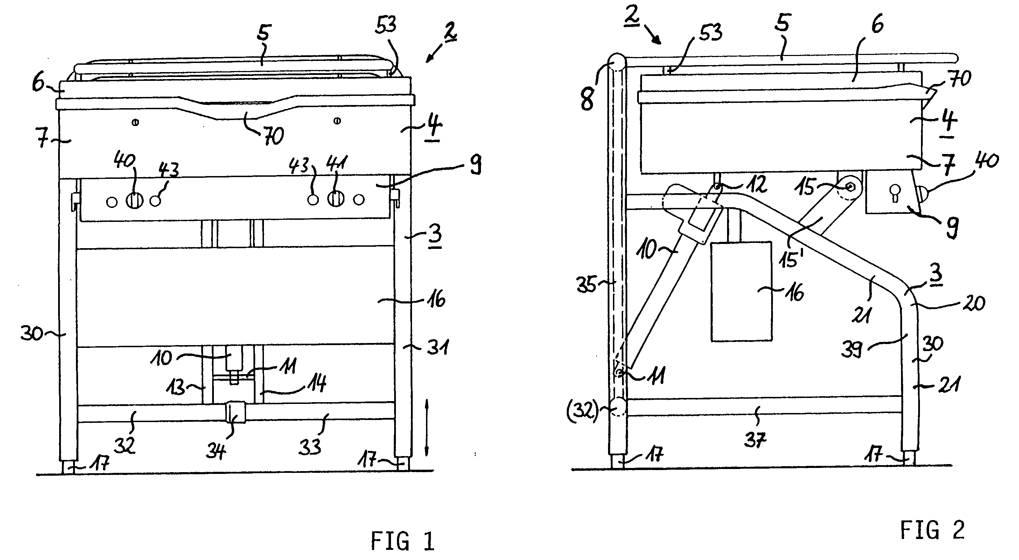

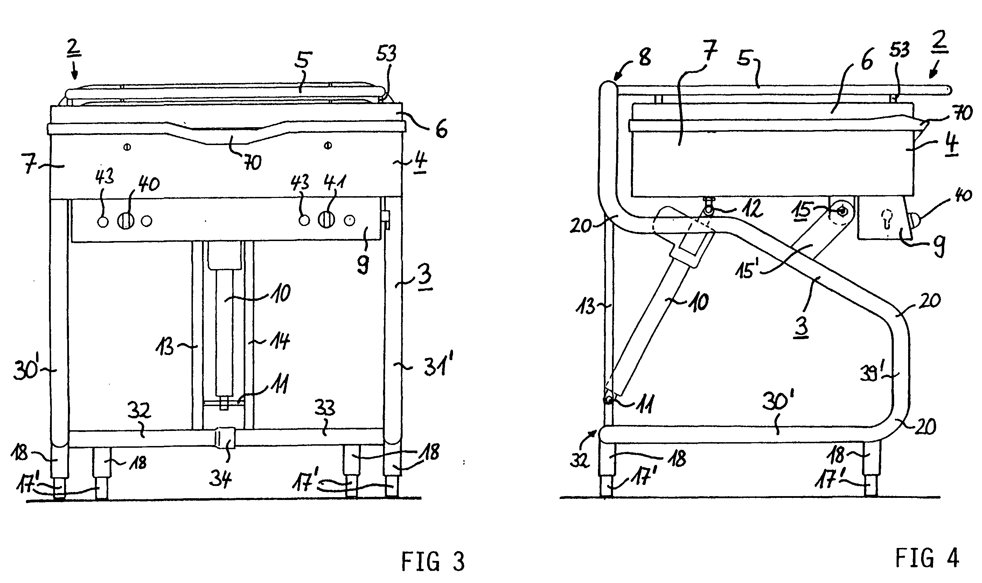

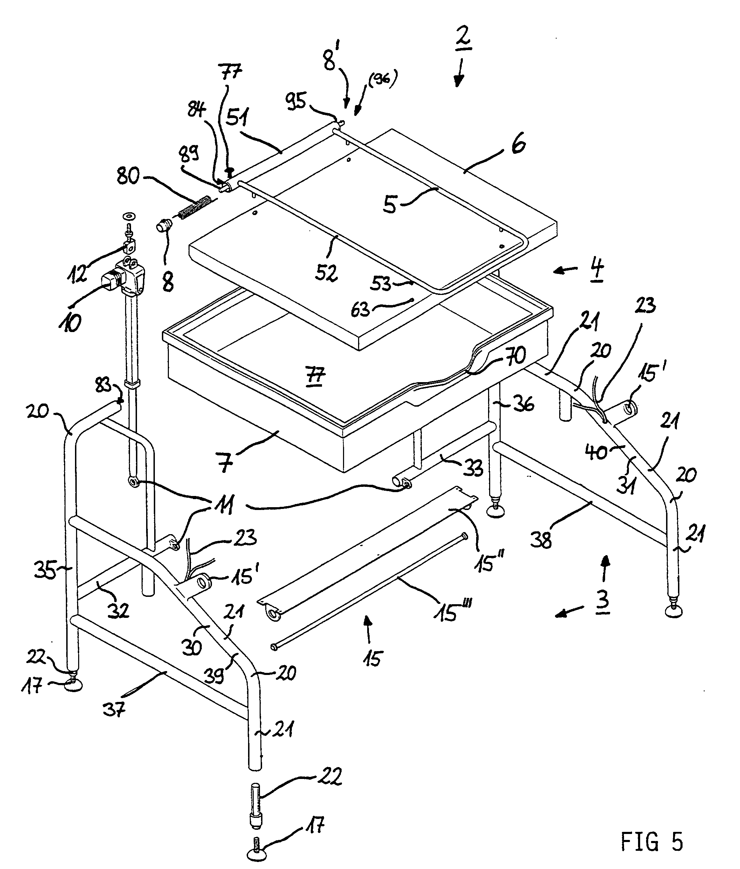

Es zeigen die FIG 1 und 2 eine erste Ausführungsform, die FIG 3 und 4 eine zweite Ausführungsform und die FIG 5 eine dritte Ausführungsform eines Garsystems, das jeweils für den Einsatz in einer Großküche (gewerblichen Küche, Gastronomie) bestimmt ist. Das Garsystem 2 umfasst in allen drei Ausführungsformen gemäß den FIG 1 bis 5 eine Gareinrichtung 4 und eine Trägereinrichtung 3 für die Gareinrichtung 4. Die Gareinrichtung 4 umfasst einen Gartiegel (Gargutbehälter, Bratpfanne) 7, der wie dargestellt beispielsweise quaderförmig ausgebildet sein kann, und einen Deckel 6, der dem oberen Rand des Gartiegels 7 angepasst ist, zum Verschließen und Abdecken des Gartiegels 7.

Unter dem Boden 77 (nur in FIG 5 dargestellt) des Gartiegels 7 sind eine oder mehrere - nicht dargestellte - Heizeinrichtungen angeordnet, die eine oder mehrere Heizzonen zum Beheizen von in den Gartiegel 7 einbringbarem Gargut definieren. Zum Bedienen und Ansteuern der Heizeinrichtungen im bzw. am Gartiegel 7 ist eine Steuereinrichtung 9 unterhalb des Gartiegels 7 vorgesehen, die in den dargestellten Ausführungsbeispielen zwei Stellelemente 40 und 41, beispielsweise Drehknebel, umfasst sowie jeweils zwei den Stellelementen 40 und 41 zugeordnete Anzeigeelemente (Kontrollleuchten) 43. Mit der dargestellten Steuereinrichtung 9 sind somit zwei Heizzonen im Gartiegel 7 getrennt ansteuerbar. Insbesondere kann mit den Stellelementen 40 und 41 eine Solltemperatur für eine Regelung der Gartemperatur durch Ansteuern der entsprechenden Heizeinrichtungen eingestellt werden.

Der Gartiegel 7 ist über ein Drehlager 15 an der Trägereinrichtung 3 und über ein weiteres Drehlager 12 an einem Hubzylinder 10 gelagert und gesichert. Der Hubzylinder 10 ist an dem vom Drehlager 12 abgewandten Ende in einem weiteren Drehlager 11 an zwei Lagerrohren 13 und 14 der Trägereinrichtung 3 gelagert. Der Gartiegel 7 ist über den Hubzylinder 10 als Antrieb nach vorne um das Drehlager 15, insbesondere nach Betätigung eines entsprechenden, nicht gezeigten Bedienelements, automatisch in eine Stellung kippbar, in der der hintere Teil des Gartiegels 7 höher liegt als der vordere Teil und somit in dem Gartiegel 7 befindliche Flüssigkeit, insbesondere verbliebene Garflüssigkeit, wie Bratfett oder -öl, oder Reinigungsflüssigkeit beim Reinigen des Gartiegels 7 durch einen Ausguss 70 aus dem Innern des Gartiegels 7 herausfließen kann. Dieses automatische Kippen des Gartiegels 7 ist bei dem Gewicht, das solche Gartiegel im Großküchenbereich üblicherweise aufweisen, eine erhebliche Erleichterung für die das Garsystem 2 bedienenden Personen geegnüber einer rein manuellen Bedienung. Die Drehachse des Drehlagers 11 kann insbesondere durch eine mit den beiden Trägerrohre 13 und 14 verbundene Schraube mit zugehöriger Mutter definiert sein.

Das Drehlager 15 umfasst gemäß FIG 5 ein an der Unterseite des Gartiegels 7 befestigtes Trägerblech 15'' mit zwei nach unten ragenden ösenartigen Fortsätzen mit jeweils einer kreisrunden Öffnung und einer Drehachse 15, die durch die beiden Öffnungen der Fortsätze des Trägerbleches 15" geführt ist und an den beiden Enden jeweils an durch eine kreisrunde Öffnung eines Halteelements 15' der Trägereinrichtung 3 geführt ist sowie mittels eines Gegenstücks, beispielsweise einer Mutter, drehbar befestigt ist.

Die Trägereinrichtung 3 ist aus zwei Rohrmodulen aufgebaut, die in FIG 1 und 2 sowie FIG 5 mit 30 und 31 und in FIG 3 und 4 mit 30' und 31' bezeichnet sind und die mittels zweier einander zugewandter Verbindungsrohre 32 und 33 an einer Rohrmuffe 34 zusammensteckbar sind und über die Schraubverbindung im Drehlager 11 sowie im Drehlager 15 miteinander verbunden werden. Die beiden korrespondierenden Rohrmodule 30 und 31 bzw. 30' und 31' sind vorzugsweise wenigstens annähernd spiegelsymmetrisch zueinander ausgebildet.

Jedes Rohrmodul 30 und 31 der Trägereinrichtung 3 weist in der Ausführungsform gemäß den FIG 1 und 2 sowie in der Ausführungsform gemäß FIG 5 ein vertikal gerade nach oben verlaufendes und dann oben horizontal nach innen gebogenes Trägerrohr 35 bzw. 36 auf, an dessen oberen, nach innen gerichteten Ende das Drehlager 8 für den Deckelträger 5 vorgesehen ist und an dessen unteren Ende ein Aufstellfuß 17 im Rohrinnern gelagert ist. Von dem hinteren Trägerrohr 35 gehen nach vorne ein Seitenrohr 39 und ein zur Versteifung das Seitenrohr 39 unten mit dem Trägerrohr 35 verbindendes Verbindungsrohr 37 ab, die jeweils mit dem Trägerrohr 35 verbunden sind. Das Seitenrohr 39 weist an seinem nach unten gerichteten Ende ebenfalls einen Aufstellfuß 17 auf, der im Rohrinnern gelagert ist. Das Seitenrohr 39 ist zweimal gebogen und verläuft dazwischen gerade. An dem Seitenrohr 39 ist auch eine Lagerhalterung 15' für das Drehlager 15 befestigt. Die Biegestellen aller dargestellten Rohre sind in allen FIG mit 20 und die geraden Abschnitte mit 21 bezeichnet.

Die Aufstellfüße 17 des Garsystems 2 sind in der in FIG 1 und 2 gezeigten Ausführungsform sowie in der Ausführungsform gemäß FIG 5 aus dem Rohrinnenraum des jeweiligen Rohrmoduls 30 bzw. 31 herausfahrbar oder hineinfahrbar, wodurch eine automatische Höhenverstellung für die Trägereinrichtung 3 und damit für die Gareinrichtung 4 in Richtung des in FIG 1 gezeigten Doppelpfeiles möglich ist. Ein motorischer Antrieb für diese Höhenverstellung der Aufstellfüße 17 ist gemäß FIG 1 und 2 in einem mit der Trägereinrichtung 3 verbundenen Antriebsgehäuse 16 angeordnet und über im Rohrinnenraum geführte hydraulische Leitungen mit einer Verstelleinrichtung für jeweils einen Aufstellfuß 17 gekoppelt. In FIG 5 weist jeder Aufstellfuß 17 ein nach oben zeigendes Gewinde auf, das mit einem drehbaren Innengewinde eines im Rohrinnenraum untergebrachten Verstellzylinders 22 zur Höhenverstellung zusammenwirkt. Der Verstellzylinder 22 kann hierzu mit einem elektrischen Motor ausgestattet sein, der über im Rohrinnenraum verlegte elektrische Leitungen versorgt wird.

Beim Ausführungsbeispiel des Garsystems 2 gemäß den FIG 3 und 4 ist im Gegensatz zu den FIG 1 und 2 sowie 5 keine automatische Höhenvorstellung vorgesehen, sondern die Aufstellfüße 17' sind jeweils in einem Aufnahmerohr 18 in einer oder mehreren Höhenpositionen fixiert. Die Trägereinrichtung 3 umfasst ein durchgehendes, mehrfach an entsprechenden Biegestellen 20 gebogenes Trägerrohr 39' des Rohrmoduls 30' und ein entsprechendes, nicht näher bezeichnetes Trägerrohr des korrespondierenden Rohrmoduls 31'. Die Aufnahmerohre 18 für die Aufstellfüße 17' sind an dem Trägerrohr 39' befestigt.

In die Rohrmodule 30 und 31 sind jeweils elektrische Kabel 23 eingeführt (FIG 5) zum Versorgen der elektrischen Komponenten mit elektrischer Energie und/oder zum Übertragen von Steuersignalen.

Der Deckel 6 für den Gartiegel 7 ist nun über Verbindungelemente 53 mit einem Deckelträger 5 verbunden, der Bestandteil der Trägereinrichtung 3 ist und in wenigstens einem Drehlager 8 um eine horizontale Achse nach oben schwenkbar ist. In der perspektivischen Draufsicht der FIG 5 ist eine Ausbildung des Deckelträgers 5 zu erkennen mit einem Trägerbügel 52, der mit beiden Enden an einem Drehrohr 51 befestigt ist und mehrere Verbindungselemente 53 aufweist, die beispielsweise mittels einer Schraubverbindung mit entsprechenden Aufnahmen 63 im Deckel 6 verbindbar sind.

Das Drehrohr 51 des Deckelträgers 5 ist in der Ausführungsform gemäß FIG 5 an beiden Enden jeweils in einem Drehlager 8 bzw. 8' drehbar in den Trägerrohren 35 und 36 der Rohrmodule 30 und 31 der Trägereinrichtung 3 gelagert. Dadurch ist der gesamte Deckel 6 um eine im wesentlichen horizontale Drehachse schwenkbar. Um das bei einer Drehung des Dekkels 6 um die Drehachse aufgrund der Schwerkraft wirkende Drehmoment zu verringern und das Hochschwenken des Deckels 6 für eine Bedienperson zu erleichtern, ist an einem, beispielsweise dem von vorne gesehen an der linken Seite des Drehrohrs 51 angeordneten, Drehlager 8 eine Feder 80 mit entsprechenden Aufnahmeteilen 83 und 84 vorgesehen, die das effektive Gewicht des Deckels 6 durch ihre Federkraft verringert.

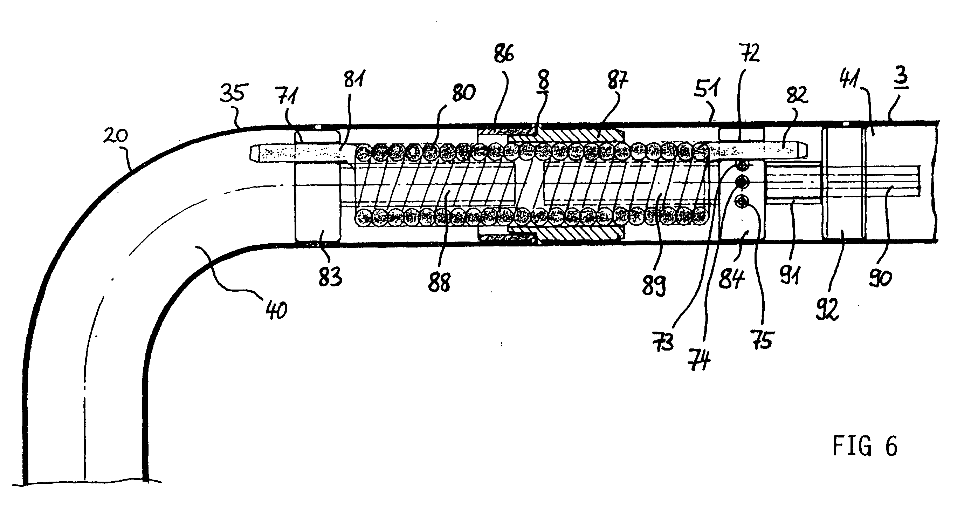

FIG 6 zeigt in einer detaillierteren Ansicht die einzelnen zur Drehbewegung des Deckels 6 verwendeten Komponenten im Anschlussbereich des Drehrohrs 51 und des Trägerrohrs 35. Das Drehlager 8 weist ein in den Rohrinnenraum 40 des Trägerrohrs 35 eingeführtes und dort befestigtes, hohlzylindrisches (buchsen- oder hülsenförmiges) erstes Drehlagerteil 86, das mit einem stirnseitigen Flansch an der Stirnseite des Rohrendes des Trägerrohres 35 anschlägt, sowie ein im Rohrinnenraum 41 des Drehrohres 51 angeordnetes und dort befestigtes, ebenfalls hohlzylindrisch ausgebildetes zweites Drehlagerteil 87 auf. Das zweite Drehlagerteil 87 gleitet mit einer zylindrischen Außenfläche in der zylindrischen Innenfläche des ersten Drehlagerteils 86.

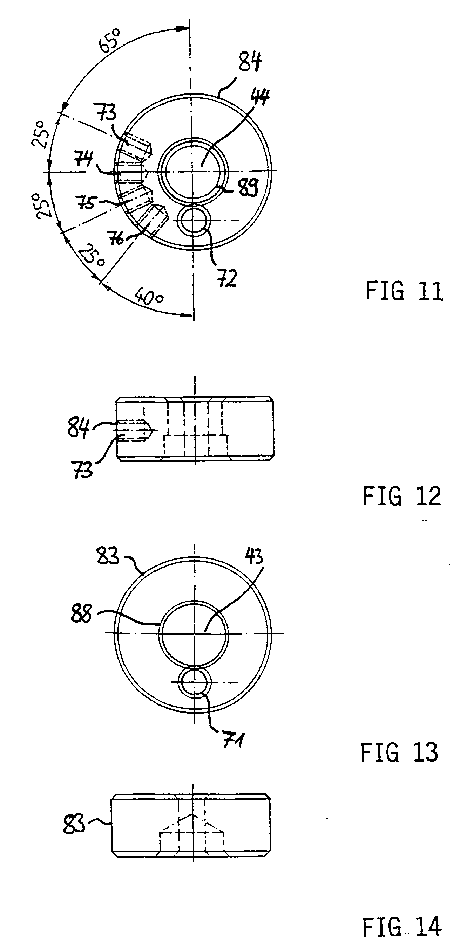

Durch den Innenraum der beiden Drehlagerteile 86 und 87 ist eine Feder 80 geführt, die als zylindrische Schraubenfeder, vorzugsweise aus einem gebogenen Runddraht, gebildet ist. Die Feder 80 kann beispielsweise eine Feder nach DIN 17224 sein. Parallel zur Längsachse der Feder 80 stehen an beiden Seiten jeweils ein stabförmiges Ende 81 und 82 ab. Das erste Ende 81 der Feder 80 ist durch eine Aufnahme 71 geführt, die als zylindrische Bohrung in einem zylindrischen oder ringförmigen Aufnahmeteil 83 ausgebildet ist. Dieses erste Aufnahmeteil 83 ist ortsfest im Trägerrohr 35 befestigt. Mit dem ersten Aufnahmeteil 83 verbunden oder an diesem ausgeformt ist ein hohlzylindrischer (oder auch massiver) Bolzen 88, auf dem die Feder 80 aufgesteckt und geführt gehalten ist. Auf der anderen Seite ist im Drehrohr 51 ein zweites Aufnahmeteil 84 befestigt, das eine Aufnahme 72 für das zweite Ende 82 der Feder 80 aufweist. Das zweite Aufnahmeteil 84 ist in den FIG 11 und 12 in verschiedenen Ansichten dargestellt. Das erste Aufnahmeteil 83 ist in den FIG 13 und 14 in zwei verschiedenen Ansichten gezeigt.

Das erste Aufnahmeteil 83 kann über eine Schraubverbindung oder eine andere lösbare Verbindung oder auch über eine unlösbare Verbindung, beispielsweise über eine Verschweißung, mit der Rohrwandung des Trägerrohres 35 verbunden sein.

Das zweite Aufnahmeteil 84 ist vorzugsweise über eine Schraubverbindung mit der Rohrwandung des Drehrohres 51 verbunden. Dazu weist das zweite Aufnahmeteil 84 eines oder vorzugsweise, wie dargestellt, mehrere, über seine Umfangsrichtung verteilt angeordnete Innengewinde 73 bis 76 auf, in denen jeweils von außen durch die Rohrwandung des Drehrohres 51 eine Feststellschraube 77 (in FIG 5 dargestellt) eingeschraubt werden kann. Die Innengewinde 73 bis 76 in dem zweiten Aufnahmeteil 84 sind vorzugsweise um einen konstanten Winkel zueinander versetzt angeordnet, beispielsweise wie in FIG 11 dargestellt jeweils um einen Winkel von 25 Grad. Der Winkel zwischen der Mittelachse des Innengewindes 73 und der durch den Innenraum 44 des Aufnahmeteils 84 und die Aufnahme 72 verlaufenden Mittelachse beträgt, wie in FIG 11 dargestellt, 65 Grad, während der Winkel zwischen der Mittelachse des Innengewindes 76 und der genannten Mittelachse des Innenraums 44 und der Aufnahme 72 40 Grad beträgt. Da das erste Ende 81 der Feder 80 in dem Aufnahmeteil 83 ortsfest verankert ist, kann durch Feststellen des Aufnahmeteils 84 in einer der durch die Innengewinde 73 bis 76 festgelegten Winkelpositionen jeweils eine unterschiedliche Vorspannung der Feder 80 eingestellt werden. Damit kann auch ein durch Nachgeben im Material nach einer bestimmten Zeit verlorenes Rückstellmoment der Feder 80 kompensiert werden, indem die Vorspannung der Feder 80 durch ein Weiterdrehen des Aufnahmeteils 84 mit dem eingeführten Ende 82 der Feder 80 erhöht wird.

Zum Verdrehen des zweiten Aufnahmeteils 84 ist an dem zweiten Aufnahmeteil 84 an der von der Feder 80 abgewandten Seite ein, vorzugsweise mit einem polygonalen Querschnitt, insbesondere einem Sechskantprofil, versehener Bolzen (Stift) 90 vorgesehen (ausgebildet oder befestigt). Dieser Bolzen 90 ist durch ein Befestigungsteil 92 geführt und gehaltert, das im Rohrinnenraum 41 des Drehrohrs 51 befestigt ist. Mittels eines Rohrschlüssels oder eines Knarren/Nuss-Werkzeuges ist es nun möglich, den Bolzens 90 und damit das zweite Aufnahmeteil 84 zu verdrehen und damit die Feder 80 zu spannen.

An der gegenüberliegenden Seite weist das Aufnahmeteil 84 einen hohlzylindrischen Bolzen 89 auf, auf dem die Feder 80 an ihrem vom Aufnahmeteil 83 abgewandten Seite geführt und aufgesteckt ist.

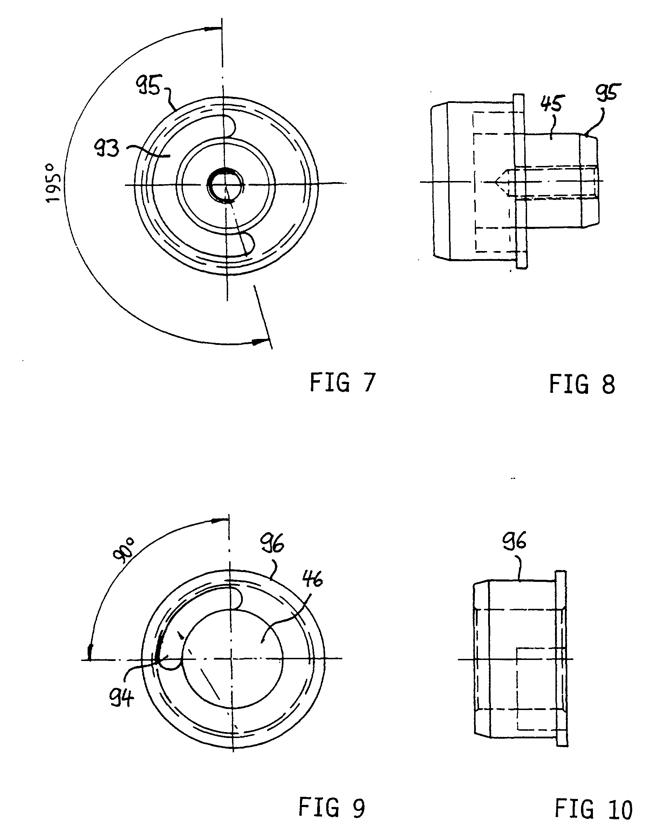

Auf der vom Drehlager 8 gegenüberliegenden Seite des Drehrohrs 51 ist das weitere Drehlager 8' angeordnet (FIG 5), das ein erstes Drehlagerteil 95, das in dem Drehrohr 51 untergebracht wird, und ein korrespondierendes zweites Drehlagerteil 96, das im Trägerrohr 36 des Rohrmoduls 31 untergebracht wird, umfasst. Die beiden Drehlagerteile 95 und 96 sind in den FIG 7 und 8 bzw. 9 und 10 detaillierter dargestellt. Beide Drehlagerteile 95 und 96 umfassen jeweils einen hohlzylindrischen Teil, der an den Rohrinnendurchmesser des jeweiligen Rohres 51 bzw. 36 angepasst ist, und jeweils einen Flansch, der an der zugehörigen Rohrstirnseite anschlägt. Das Drehlagerteil 95 weist ferner einen Rohrstutzen 45 geringeren Durchmessers auf, der in eine entsprechende Öffnung 46 im Drehlagerteil 96 einsteckbar ist.

Schließlich weist das Drehlagerteil 95 eine in Umfangsrichtung verlaufende Ringnut 93 auf, die sich über einen Winkel von 195 Grad erstreckt. Das Drehlagerteil 96 weist einen entsprechenden ringsegmentartigen Fortsatz 94 auf, der sich über einen Winkel von 90 Grad in Umfangsrichtung erstreckt und in die Ringnut 93 des Drehlagerteils 95 in Eingriff bringbar ist. Die Drehlagerteile 95 und 96 sind somit um einen resultierenden Winkel von 105 Grad gegeneinander drehbar, wobei die Endpositionen durch das Anschlagen der jeweiligen Enden von Ringnut 93 und Fortsatz 94 aneinander festgelegt sind. Die Ringnut 93 und der Fortsatz 94 bilden somit Anschlagsmittel für die Drehbewegung. Da das Drehlagerteil 95 fest mit dem Drehrohr 51 und das Drehlagerteil 96 fest mit dem Trägerrohr 36 verbunden sind, kann der Dekkel 6 somit aus der Horizontalen, die eine Endposition der Anschlagsmittel 93 und 94 bildet, in eine über die Senkrechte hinaus liegende Winkelposition von 105 Grad geschwenkt werden, bei der wiederum der Fortsatz 94 an der anderen Begrenzungsseite der Ringnut 93 anschlägt. Der Dekkel 6 ist dann sicher gehalten und kann nicht nach vorne herunterfallen.

Das durch die Federkraft der Feder 80 in der nach oben gerichteten Drehrichtung ausgeübte Drehmoment nimmt vorzugsweise von der horizontalen Endposition (Ausgangsposition beim Winkel 0 Grad) des Drehlagers 8', bei der der Deckel 6 auf dem Gartiegel 7 aufliegt, zu einer oberen Endposition (beim Winkel 105 Grad) kontinuierlich ab. In der Ausgangsposition kann das Ausgangsdrehmoment Null sein oder einem voreingestellten Wert entsprechen. Dieser Wert des Ausgangsdrehmoments kann über die Einstellschraube 77 und die entsprechenden Gewinde 73 bis 76 eingestellt werden.

Die Feder 80 kompensiert somit einen Teil des Gewichts des Deckels 6, so dass sich dieser leichter anheben lässt, ist aber so schwach, dass der Deckel 6 in der Ausgangsposition auf dem Gartiegel 7 ruht. Die Feder 80 übt dabei praktisch ausschließlich ein Drehmoment über die Drehachse und nicht auf andere Teile des Garsystems aus, so dass keine Gegenmaßnahmen wie z.B. Versteifungen zum Auffangen der unerwünschten Reaktionskräfte (Gegenkräfte) mehr erforderlich sind.

Die Erfindung ist nicht auf die dargestellten Ausführungsbeispiele beschränkt, sondern kann auch in einer Vielzahl von abgewandelten Ausführungsformen gemäß Anspruch 1 verwirklicht werden. Beispielsweise kann für eine Drehbewegung auch nur ein Drehlager an einer Seite des drehbaren Teils vorgesehen sein. Ferner muß die Drehachse für eine Drehbewegung nicht horizontal verlaufen, sondern kann auch gegen die Horizontale geneigt sein, insbesondere auch senkrecht dazu verlaufen. Außerdem kann anstelle eines passiven dynamischen Elements wie der Feder 80 auch eine aktive Kompensierung des Gewichts des Deckels 6 vorgesehen sein, insbesondere durch motorische Unterstützung, bei der der Deckel 6 automatisch schwenkbar ist. Auch andere Funktionsteile für die Gareinrichtung können in der Rohrkonstruktion der Trägereinrichtung 3 untergebracht werden, wenn diese erforderlich sind.

Anstelle von nur zwei Rohrmodulen 30 und 31 können ferner auch mehrere Rohrmodule vorgesehen sein, insbesondere wenn die Trägereinrichtung für breitere und/oder tiefere Gareinrichtungen ausgebildet werden soll, indem zusätzliche Rohrmodule als Zwischenmodule eingefügt werden können. Man erhält damit ein einfach an verschiedenen Größen der Gareinrichtung anpassbares Konstruktionssystem ("Baukastensystern") für die Trägereinrichtung 3.

Die Trägereinrichtung 3 ist in allen Ausführungsformen mit einer Rohrkonstruktion gebildet, die mehrere einzelne, miteinander verbundenen oder verbindbare Rohrelemente oder Rohrmodule aufweist. Die Rohre bestehen vorzugsweise aus einem rostfreien (korrosionsfesten) Metall, insbesondere einem Edelstahl oder Aluminium oder einer Aluminiumlegierung. Es kann insbesondere ein handelsübliches Rohr, z.B. nach DIN 2463, verwendet werden.

Die Rohre der Rohrkonstruktionen für die Trägereinrichtung 3 sind in allen Ausführungsformen vorzugsweise Rundrohre, also zylindrisch ausgebildet. An den exponierten Stellen, an denen eine bedienende Person mit der Rohrkonstruktion in Kontakt kommen kann, weist die Trägereinrichtung 3 somit nur runde Oberflächen auf, die mit der Mantelfläche des Rundrohres oder mit den abgerundeten Oberflächen der Biegestellen 20 gebildet sind. Es können aber auch andere Rohrquerschnitte, beispielsweise Mehrkantrohre (mit polygonalem Querschnitt) wie Vierkant- oder Sechskantrohre, verwendet werden.

Die dargestellten Komponenten der Drehlager 8 und 8' können als Drehteile einfach, kostengünstig und präzise hergestellt werden. Die Rundrohrkonstruktion der Trägereinrichtung 3 erlaubt somit auch eine besonders einfache Ausbildung der in ihr untergebrachten Komponenten.

Das Garsystem gemäß der Erfindung ist nicht auf den Einsatz in gewerblichen Küchen beschränkt, sondern kann bei entsprechender Modifikation und Dimensionierung auch in privaten Haushaltsküchen zum Einsatz kommen

### Bezugszeichenliste

- 2: Garsystem
- 3: Trägereinrichtung
- 4: Gareinrichtung
- 5: Deckelträger
- 6: Deckel
- 7: Gartiegel
- 8: Drehlager
- 9: Steuereinrichtung
- 10: Hubzylinder
- 11, 12: Drehlager
- 13, 14: Lagerrohre
- 15: Drehlager
- 15': Lagerhalterung
- 15": Trägerblech
- 15'': Drehachse
- 16: ???
- 17, 17': Aufstellfuß
- 18: Fußaufnahmerohr
- 20: gebogene Stelle
- 21: gerade Stelle
- 22: Höhenverstellvorrichtung
- 23: Kabel
- 30, 30': Rohrmodul
- 31, 31': Rohrmodul
- 32, 33: Verbindungsrohr
- 34: Rohrmuffe
- 35, 36: Trägerrohr
- 39: Seitenrohr
- 51: Drehrohrteil
- 52: Bügelrohrteil
- 53: Befestigungsteil
- 63: Befestigungsaufnahme
- 70: Ausguss
- 71, 72: Aufnahme
- 73 - 76: Innengewinde
- 77: Stellschraube
- 80: Feder
- 81, 82: Ende
- 83, 84: Aufnahmeteil
- 85: Drehlager
- 86, 87: Drehlagerteil
- 88, 89: Bolzen
- 90: Bolzen
- 91: Hülse
- 92: Ring

## Patentansprüche

1. Garsystem (2) zum Einsatz in gewerblichen Küchen, mit
a) einer beheizbaren Gareinrichtung (4) und
b) einer Trägereinrichtung (3) zum Tragen der Gareinrichtung,
wobei
c) die Trägereinrichtung eine Rohrkonstruktion (30, 31) umfasst und wenigstens ein Funktionsteil für die Gareinrichtung im Röhrinnenraum der Rohrkonstruktion angeordnet ist, **gekennzeichnet durch**
d) wenigstens eine wenigstens teil weise, in dem Rohrinnenraum der Rohrkonstruktion angeordnete aktive mechanische, elektromechanische oder hydraulische Bewegungsvorrichtung zum Kippen oder Drehen der Gareinrichtung oder eines Gargutträgers oder Gargutbehälters oder eides Deckels zum Abdecken oder Verschließen eines Gargutbehälters.

2. Garsystem nach Anspruch 1, bei dem die Rohrkonstruktion der Trägereinrichtung wenigstens zwei Rohre (32, 33, 51, 35, 36) umfasst, die lösbar miteinander verbunde sind.

3. Garsystem nach Anspruch 1 oder Anspruch 2, bei dem das Rohr oder die Rohre der Rohrkonstruktion im Wesentlichen hohlzylindrisch ausgebildet sind.

4. Garsystem nach einem der vorhergehenden Ansprüche, bei dem das oder die Rohre der Rohrkonstruktion aus Metall, vorzugsweise einem Edelstahl, bestehen und vorzugsweise durch einen Biegeprozess gebogen sind

5. Garsystem nach einem der Ansprüche 1 bis 4, bei dem die Bewegungsvorrichtung wenigstens ein Drehlager (8, 8') umfasst.

6. Garsystem nach Arispruch 5, bei dem wenigstens einem Drehlager wenigstens ein, vorzugsweise ebenfalls in dem Rohrinnenraum angeordnetes, dynamisches Element zum Ausüben eines Drehmomentes auf das Drehlager zugeordnet ist.

7. Garsystem nach Anspruch 6, bei dem das von dem dynamischen Element ausgeübte Drehmoment entgegengesetzt zu einem von der Gravitationskraft bewirkten Drehmoment gerichtet ist.

8. Garsystem nach Anspruch 6 oder Anspruch 7, bei dem das dynamische Element eine Feder (80), insbesondere eine zylindrische Schraubenfeder oder eine Spiralfeder oder eine Torsionsfeder, ist, deren eines Ende mit dem Drehlager oder einem drehbaren Teil (51) der Gareinrichtung gekoppelt ist und deren anderes Ende mit der Trägereinrichtung gekoppelt ist und die bei einer Drehung der beiden Enden relativ zueinander in einer Drehrichtung ein Drehmoment ausübt.

9. Garsystem nach einem der Ansprüche 5 bis 8, bei dem wenigstens ein Drehlager (8') eine Ausgangsposition und eine Endposition aufweist, die vorzugsweise durch zusammenwirkende Anschlagsmittel (93, 94) definiert sind.

10. Garsystem nach Anspruch 9 in Rückbeziehung auf einen der Ansprüche 6 bis 8, bei dem das Drehmoment des dynamischen Elements auf das Drehlager bzw. das drehbare Teil der Gareinrichtung bei der Endposition des Drehlagers maximal ist und bei der Ausgangsposition einem voreingestellten oder einstellbaren Ausgangsdrehmoment entspricht.

11. Garsystem nach Anspruch 8 und Anspruch 10, bei dem die beiden Enden der Feder in der Ausgangsposition des Drehlagers in wenigstens zwei verschiedene Drehpositionen relativ zueinander einstellbar sind zum Einstellen des Ausgangsdrehmomentes.

12. Garsystem nach Anspruch 11, bei dem ein aufnahmeteil (84) für ein Ende der Feder vorgesehen ist, das mehrere in Umfangsrichtung um die Drehachse des Drehlagers verteilte Gewinde (73 bis 76) zum Einschrauben einer Stellschraube (77) aufweist.

13. Garsystem nach Anspruch 12, bei dem das Aufnahmeteil (84) einen Verstellbolzen (90) aufweist, über den das Aufnahmeteil (84) mit einem Werkzeug verdrehbar ist.

14. Garsystem nach einem der vorhergehenden Ansprüche mit wenigstens einer, insbesondere als Funktionsteil für die Gareinrichtung in dem Rohrinnenraum der Trägereinrichtung angeordneten, Vorrichtung zum Versorgen der Gareinrichtung mit Energie und/oder Steuersignalen, insbesondere wenigstens einer Leitung.

15. Garsystem nach einem der vorhergehenden Ansprüche, bei dem im Rohrinnenraum der Rohrkonstruktion elektrische Kabel für die Gareinrichtung geführt sind.

16. Garsystem nach einem der vorhergehenden Ansprüche, bei dem durch den Rohrinnenraum der Rohrkonstruktion hydraulische Leitungen geführt sind.

17. Garsystem nach einem der vorhergehenden Ansprüche, bei dem durch den Rohrinnenraum der Rohrkonstruktion, insbesondere durch darin angeordnete Leitungen, Heizgas und/oder eine Kühlflüssigkeit für die Gareinrichtung durchleitbar ist.

18. Garsystem nach einem der vorhergehenden Ansprüche, bei dem die Trägereinrichtung Aufstellfüße (17) aufweist, die im Rohrinnenraum der Trägereinrichtung angeordnet bzw. gelagert sind.

19. Garsystem nach Anspruch 18, bei dem die Aufstellfüße höhenverstellbar sind.

20. Garsystem nach Anspruch 19, bei dem die Aufstellfüße mittels eines motorischen oder hydraulischen Antriebssystems höhenverstellbar sind, das vorzugsweise ebenfalls wenigstens teilweise im Rohrinnenraum angeordnet ist.

## Claims

1. Cooking system (2) for use in commercial kitchens, comprising
a) a heatable cooking appliance (4) and
b) a support apparatus (3) for supporting the cooking appliance, wherein
c) the support apparatus comprises a tubular construction (30, 31), and at least one operating part for the cooking appliance is disposed in the tubular interior of the tubular construction, **characterised by**
d) at least one active mechanical, electromechanical or hydraulic moving device at least partially disposed in the tubular interior of the tubular construction for tilting or rotating the cooking appliance or a cooked food support or cooked food container or lid for covering or closing a cooked food container.

2. Cooking system according to claim 1, wherein the tubular construction of the support apparatus comprises at least two tubes (32, 33, 51, 35, 36) which are connected together in a detachable manner.

3. Cooking system according to claim 1 or claim 2, wherein the tube or the tubes of the tubular construction are formed substantially hollow cylindrical.

4. Cooking system according to one of the preceding claims, wherein the tube or tubes of the tubular construction consist of metal, preferably a special steel and are preferably bent by a bending process.

5. Cooking system according to one of claims 1 to 4, wherein the moving device comprises at least one rotary bearing (8, 8').

6. Cooking system according to claim 5, wherein at least one rotary bearing is allocated at least one dynamic element (80) preferably also disposed in the tubular interior for exerting a torque on the rotary bearing.

7. Cooking system according to claim 6, wherein the torque exerted by the rotary element is oriented opposite to a torque effected by the force of gravity.

8. Cooking system according to claim 6 or claim 7, wherein the dynamic element is a spring (80), in particular a cylindrical helical spring or a spiral spring or a torsion spring, whose one end Is coupled to the rotary bearing or a rotary part (51) of the cooking appliance and whose other end is coupled to the support apparatus and which exerts a torque upon rotation of the two ends relative to one another in one direction of rotation.

9. Cooking system according to one of claims 5 to 8, wherein at least one rotary bearing (8') has a starting position and an end position which are preferably defined by cooperating stop means (93, 94).

10. Cooking system according to claim 9 with reference to one of claims 6 to 8, wherein the torque of the dynamic element exerted on the rotary bearing or the rotary part of the cooking appliance is at its maximum in the end position of the rotary bearing and at the starting position corresponds to a pre-set or adjustable starting torque.

11. Cooking system according to claim 8 and claim 10, wherein the two ends of the spring are adjustable relative to one another in the starting position of the rotary bearing in at least two different rotational positions in order to set the starting torque.

12. Cooking system according to claim 11, wherein a receiving part (84) is provided for one end of the spring, which has plural threads (73 to 76) distributed in the circumferential direction about the axis of rotation of the rotary bearing for screwing in a set screw (77).

13. Cooking system according to claim 12, wherein the receiving part (84) has an adjusting bolt (90) via which the receiving part (84) is rotatable with a tool.

14. Cooking system according to one of the preceding claims having at least one device in particular as an operating part for the cooking appliance in the tubular interior of the support apparatus for supplying the cooking appliance with energy and/or control signals, in particular at least one line.

15. Cooking system according to one of the preceding claims, wherein electrical cables are passed through the tubular interior of the tubular construction for the cooking appliance.

16. Cooking system according to one of the preceding claims, wherein hydraulic lines are passed through the tubular interior of the tubular construction.

17. Cooking system according to one of the preceding claims, wherein fuel gas and/or a cooling fluid for the cooking appliance may be passed through the tubular interior of the tubular construction, in particular through lines disposed therein.

18. Cooking system according to one of the preceding claims, wherein the support apparatus has feet (17) which are disposed or mounted in the tubular interior of the support apparatus.

19. Cooking system according to claim 18, wherein the feet are height-adjustable.

20. Cooking system according to claim 19, wherein the feet are height-adjustable by means of a motor or hydraulic drive system, which is preferably also disposed at least partly in the tubular interior.

## Revendications

1. Système de cuisson (2) pour utilisation dans des cuisines industrielles, comprenant
(a) une installation de cuisson (4) pouvant être chauffée et
(b) une installation de support (3) pour supporter l'installation de cuisson, où
(c) l'installation de support comprend une construction de tubes (30, 31), et au moins une partie fonctionnelle pour l'installation de cuisson est disposée dans l'espace intérieur de la construction de tubes, **caractérisé par**
(d) au moins un dispositif de déplacement actif mécanique, électro-mécanique ou hydraulique disposé au moins partiellement dans un espace intérieur de la construction de tubes pour le basculement ou la rotation de l'installation de cuisson ou d'un support de produit à cuire ou récipient de produit à cuire ou d'un couvercle pour couvrir ou fermer un récipient de produit à cuire.

2. Système de cuisson selon la revendication 1, dans lequel la construction de tubes de l'installation de support comprend au moins deux tubes (32, 33, 51, 35, 36) qui sont assemblés amoviblement l'un avec l'autre.

3. Système de cuisson selon la revendication 1 ou la revendication 2, dans lequel le tube ou les tubes de la construction de tubes sont réalisés sensiblement en cylindre creux.

4. Système de cuisson selon l'une des revendications précédentes, dans lequel le ou les tubes de la construction de tubes sont réalisés en métal, de préférence en un acier fin et sont courbés de préférence par un processus de pliage.

5. Système de cuisson selon l'une des revendications 1 à 4, dans lequel le dispositif de déplacement comprend au moins un palier tournant (8, 8').

6. Système de cuisson selon la revendication 5, dans lequel est associé à au moins un palier tournant au moins un élément dynamique (80) disposé de préférence également dans l'espace intérieur de tube, pour exercer un couple de rotation sur le palier de rotation.

7. Système de cuisson selon la revendication 6, dans lequel le couple de rotation exercé par l'élément dynamique est dirigé d'une manière opposée à un couple de rotation provoqué par la force de gravitation.

8. Système de cuisson selon la revendication 6 ou la revendication 7, dans lequel l'élément dynamique est un ressort (80), en particulier un ressort cylindrique de compression ou un ressort en spirale ou un ressort de torsion, dont une extrémité est couplée avec le palier de rotation ou avec une partie tournante (51) de l'installation de cuisson et dont l'autre extrémité est couplée avec l'installation de support et qui, lors d'une rotation des deux extrémités l'une relativement à l'autre, exerce un couple de rotation dans une direction de rotation.

9. Système de cuisson selon l'une des revendications 5 à 8, dans lequel au moins un palier de rotation (8') présente une position de départ et une position finale qui sont définies de préférence par des moyens de butée coopérants (93, 94).

10. Système de cuisson selon la revendication 9 se référant à l'une des revendications 6 à 8, dans lequel le couple de rotation de l'élément dynamique sur le palier de rotation respectivement la partie tournante de l'installation de cuisson est au maximum dans la position d'extrémité du palier de rotation et, dans la position de départ, correspond à un couple de rotation de départ préréglé ou réglable.

11. Système de cuisson selon la revendication 8 et la revendication 10, dans lequel les deux extrémités du ressort, dans la position initiale du palier de rotation, sont réglables dans au moins deux positions de rotation différentes l'une relativement à l'autre, pour le réglage du couple de rotation initial.

12. Système de cuisson selon la revendication 11, dans lequel est prévue une partie de réception (84) pour une extrémité du ressort, qui présente plusieurs filets (73 à 76) répartis dans la direction périphérique autour de l'axe de rotation du palier de rotation pour le vissage d'une vis de réglage (77).

13. Système de cuisson selon la revendication 12, dans lequel la partie de réception (84) présente un boulon d'ajustage (90) par lequel la partie de réception (84) peut être tournée avec un outil.

14. Système de cuisson selon l'une des revendications précédentes avec au moins un dispositif, disposé en particulier comme partie fonctionnelle de l'installation de cuisson dans l'espace intérieur tubulaire de l'installation de support, pour alimenter l'installation de cuisson en énergie et/ou en signaux de commande, en particulier au moins un conduit.

15. Système de cuisson selon l'une des revendications précédentes, dans lequel sont guidés dans l'espace intérieur de la construction de tubes des câbles électriques pour l'installation de cuisson.

16. Système de cuisson selon l'une des revendications précédentes, dans lequel des conduits hydrauliques sont guidés à travers l'espace intérieur de la construction de tubes.

17. Système de cuisson selon l'une des revendications précédentes, dans lequel un gaz de chauffage et/ou un liquide de refroidissement pour l'installation de cuisson peut être amené à passer à travers l'espace intérieur de la construction de tubes, en particulier à travers des conduits disposés dans celle-ci.

18. Système de cuisson selon l'une des revendications précédentes, dans lequel l'installation de support présente des pieds de montage (17) qui sont disposés ou logés dans l'espace intérieur tubulaire de l'installation de support.

19. Système de cuisson selon la revendication 18, où les pieds de montage sont ajustables en hauteur.

20. Système de cuisson selon la revendication 19, où les pieds de montage sont ajustables en hauteur au moyen d'un système d'entraînement mécanique ou hydraulique, qui est disposé de préférence également au moins partiellement dans l'espace intérieur tubulaire.
